# EUROPEAN PATENT APPLICATION

(11) **EP 2 876 767 A1**
(43) Date of publication of application: **27.05.2015**
(21) Application number: 14175294.9
(22) Date of filing: 01.07.2014
(51) Int. Cl.: H02J 3/38, H02K 47/00

(54) **Power supply system**

(30) Priority: 26.11.2013 TW 102142995
(71) Applicant: Rong Shin Jong Co., Ltd., Hsinchu County 302 (TW)
(72) Inventor: Chung, Yi-Ju, 302 Hsinchu County (TW); Pu, Chia-Hsien, 302 Hsinchu County (TW)
(74) Representative: Lang, Christian

(57) **Abstract**

A cyclic power supply system, which is electrically connected with a power supply device to receive power-generation energy, comprises at least one magnetic power generator receiving the power-generation energy to generate a first alternating electromotive force; at least one electric storage unit receiving and storing the first alternating electromotive force as electric energy; at least one power generation module that includes a motor having a shaft driven to rotate by the electric energy of the electric storage unit, magnetic rings connected with the shaft, and three-phase power generation coils surrounded by the magnetic rings, wherein the magnetic field of the rotating magnetic rings induces a second alternating electromotive force in the three-phase power generation coils; and a power feedback device transmitting the second alternating electromotive force to the power supply device to enable the power supply device to utilize the second alternating electromotive force to generate the power-generation energy.

## Description

This application claims priority for Taiwan patent application no. 102142995 filed at November 26, 2013, the content of which is incorporated by reference in its entirely.

### BACKGROUND OF THE INVENTION

### Field of the Invention

The present invention relates to a power generation system, particularly to a cyclic power supply system.

### Description of the Related Art

With growth of population and advance of science and technology, energy consumption is also obviously increased. Energy shortage, which people had never cared about before, has become a big challenge nowadays. In addition to developing new energy resources, using the existing energies in efficient ways is also an important approach to solve the energy crisis and achieve the sustainable development of human beings.

The increased energy consumption not only induces the global warming effect but also causes electricity price inflation. Electricity price inflation not only increases the household expenditure but also raises the commercial cost and consumer price. If the commercial power can be effectively harnessed to generate electric power, the generated electric power can be used by the households and businesses or even fed back to the power plant to reduce the power generation of power plants. Further, the household expenditure on electric power is also reduced.

Accordingly, the present invention proposes a cyclic power supply system to overcome the abovementioned problems.

### SUMMARY OF THE INVENTION

The primary objective of the present invention is to provide a cyclic power supply system, which can cyclically utilize the electric energy generated by a power generation module to reduce the consumption and expenditure of commercial power.

Another objective of the present invention is to provide a cyclic power supply system, which can use solar energy or wind power to generate electric energy and supply the electric energy to the power generation module in the regions where no commercial power is available.

To achieve the abovementioned objectives, the present invention proposes a cyclic power supply system, which is electrically connected with a power supply device to receive power-generation energy, and which comprises at least one magnetic power generator, at least one electric storage unit, at least one power generation module, and a power feedback device. The magnetic power generator receives the power-generation energy from the power supply device, driven by the power-generation energy to generate a first alternating electromotive force. The electric storage unit is electrically connected with the magnetic power generator, receives the first alternating electromotive force, and stores the first alternating electromotive force as electric energy. The power generation module is electrically connected with the electric storage unit, driven to operate by the electric energy of the electric storage unit. The power generation module includes a motor having a shaft driven to rotate by the electric energy of the electric storage unit; a plurality of magnetic rings connected with the shaft; and a plurality of three-phase power generation coils penetrated by the shaft and each surrounded by one magnetic ring, wherein while the magnetic ring rotates together with the shaft, a magnetic field of the magnetic ring induces a second alternating electromotive force in the corresponding three-phase power generation coil. The power feedback device is electrically connected with the power generation module and the power supply device, and transmits the second alternating electromotive force to the power supply device to enable the power supply device to utilize the second alternating electromotive force to generate the power-generation energy.

Below, the embodiments are described in detail to make easily understood the objectives, technical contents, characteristics and accomplishments of the present invention.

### BRIEF DESCRIPTION OF THE DRAWINGS

- Fig.1: is a block diagram schematically showing a cyclic power supply system according to a first embodiment of the present invention;
- Fig.2: is a perspective view schematically showing a power generation module of a cyclic power supply system according to the first embodiment of the present invention;
- Fig.3: is an exploded view schematically showing a power generation module of a cyclic power supply system according to the first embodiment of the present invention; and
- Fig.4: is a block diagram schematically showing a cyclic power supply system according to a second embodiment of the present invention.

### DETAILED DESCRIPTION OF THE INVENTION

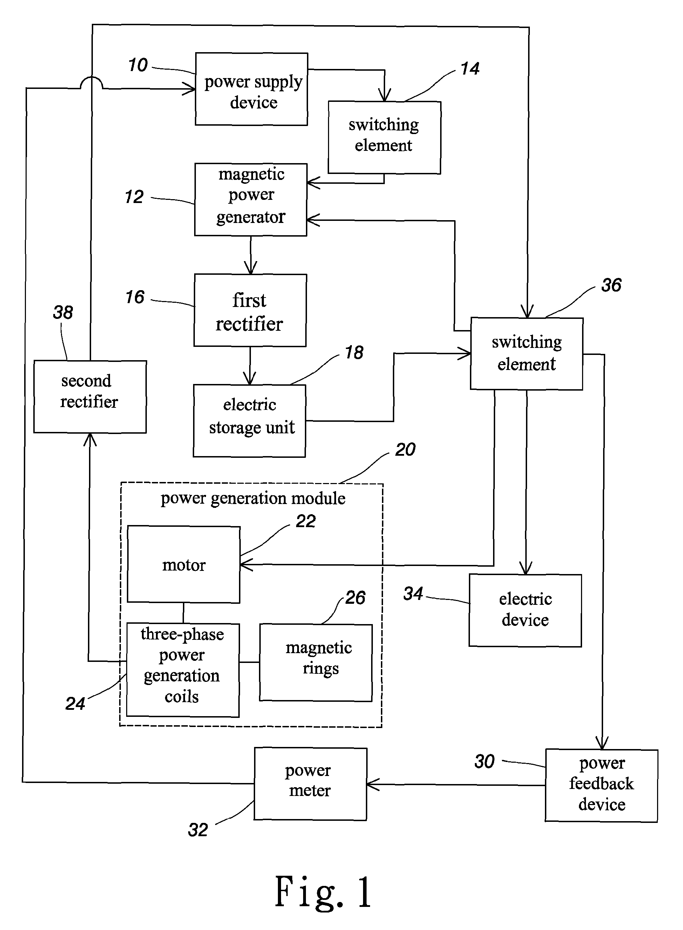

Refer to Fig.1 for a first embodiment of the present invention. The present invention proposes a cyclic power supply system, which is electrically connected with a power supply device 10. The power supply device 10 is a commercial power supply device or a renewable energy supply device. The renewable energy supply device is a solar power generation device or a wind power generation device. The power supply device 10 provides power-generation energy for at least one magnetic power generator 12 of the cyclic power supply system. A switching element 14 is arranged between and electrically connected with the power supply device 10 and the magnetic power generator 12 and switches to determine whether the magnetic power generator 12 receives the power-generation energy from the power supply device 10. While the switching element 14 switches to enable the magnetic power generator 12 to receive the power-generation energy from the power supply device 10, the magnetic power generator 12 is driven by the power-generation energy to generate a first alternating electromotive force to a first rectifier 16. The first rectifier 16 is electrically connected with the magnetic power generator 12 and at least one electric storage unit 18. The first rectifier 16 receives the first alternating electromotive force, converts the first alternating electromotive force into DC (Direct Current) electric energy, and outputs the DC electric energy to the electric storage unit 18. Then, the electric storage unit 18 stores the electric energy. The electric storage unit 18 is electrically connected with a switching element 36. The switching element 36 is further electrically connected with at least one power generation module 20, switching the electric connection between the electric storage unit 18 and the power generation module 20.

Refer to Figs. 1-3. In the first embodiment, the power generator module 20 includes a motor 22, a plurality of three-phase power generation coils 24, and a plurality of magnetic rings 26. The motor 22 is a DC or AC (Alternating Current) motor. In the first embodiment, the motor 22 is a DC motor. The motor 22 has a shaft 220. The motor 22 is powered by the electric energy of the energy storage unit 18, driving the shaft 220 to rotate. The three-phase power generation coils 24 are penetrated by the shaft 220 but not fixed to the shaft 220. Each three-phase power generation coils 24 is fixed onto a coil fixing element 25, which is in form of a disc. The shaft 220 penetrates the disc of the coil fixing element 25. Thus, the three-phase power generation coils 24 are attached to the coil fixing elements 25 fixedly and would not rotate together with the shaft 220. In the first embodiment, there are three pieces of three-phase power generation coils 24, and three pieces of coil fixing elements 25 are respectively used to fix the three pieces of three-phase power generation coils 24. The magnetic rings 26 are attached to the shaft 220 fixedly via a plurality of magnetic ring fixing elements 28. Each magnetic ring fixing element 28 surrounds one magnetic ring 26 and fixes the magnetic ring 26 to the shaft 220. Each magnetic ring fixing element 28 has a fixing through-hole 282 fixed to the shaft 220, whereby the magnetic rings 26 and the magnetic ring fixing elements 28 are installed in the shaft 220 fixedly. Each magnetic ring 26 surrounds the corresponding three-phase power generation coil 24. While the shaft 220 rotates, it drives the magnetic rings 26, which are attached to the shaft 220 fixedly, to rotate also. Thus, the magnetic field of the magnetic ring 26 induces a second alternating electromotive force in the corresponding three-phase power generation coil 24. A second rectifier 38 is electrically connected with the three-phase power generation coil 24 of the power generator module 20, receiving the second alternating electromotive force and outputting a DC electric energy to a DC electric energy switching element 36.

In the first embodiment, the switching element 36 is electrically connected with the three-phase power generation coils 24, the motor 22, the magnetic power generator 12 and the electric storage unit 18, switching the electric connection of the three-phase power generation coils 24 and the motor 22. The second rectifier 38 converts the second alternating electromotive force, which is generated by three-phase power generation coils 24, into DC electric energy. The switching element 36 switches to enable the motor 22 to be powered by the DC electric energy. The switching element 36 may alternatively switch to electrically connect the magnetic power generator 12 with the three-phase power generation coils 24. Thus, the magnetic power generator 12 is powered to operate by the electric energy of the power generator module 20. At this time, the switching element 14 switches to cut off the power-generation energy sent to the magnetic power generator 12, and the magnetic power generator 12 is merely driven by the electric energy of the three-phase power generation coils 24. Alternatively, the switching element 36 switches to electrically connect the electric storage unit 18 and the power generator module 20. Then, the electric energy of the electric storage unit 18 is sent to the motor 22, driving the motor 22 to operate.

In the first embodiment, the switching element 36 is also electrically connected with an electric device 34 to switch the electric connection of the electric device 34 and the three-phase power generation coils 24, whereby the electric device 34 can be powered to operate by the electric energy generated by the power generator module 20. In the first embodiment, the switching element 36 is also electrically connected with a power feedback device 30. The power feedback device 30 is further electrically connected with the power supply device 10. Thereby, the switching element 36 can switch to electrically connect the power feedback device 30 with the three-phase power generation coils 24 and make the power feedback device 30 feed back the second alternating electromotive force to the power supply device 10. Then, the power supply device 10 can once more make use of the second alternating electromotive force to generate the power-generation energy. In the first embodiment, a power meter 32 is electrically connected with the power feedback device 30 and the power supply device 10 to measure the quantity of the energy of the second alternating electromotive force fed back to the power supply device 10, whereby the cost of the fed back energy can be deducted from the electricity bill.

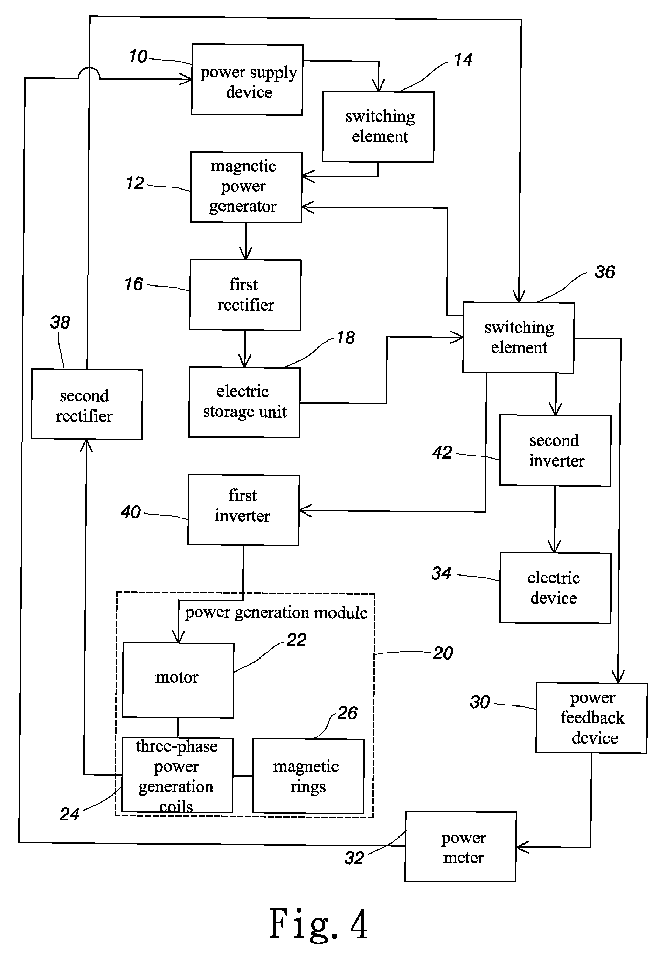

Refer to Fig.4 for a second embodiment of the present invention, wherein the motor is an AC motor. In the second embodiment, the cyclic power supply system comprises a power supply device 10. The power supply device 10 is a commercial power supply device or a renewable energy supply device. The renewable energy supply device is a solar power generation device or a wind power generation device. The power supply device 10 supplies power-generation energy to at least one magnetic power generator 12 of the cyclic power supply system. A switching element 14 is arranged between and electrically connected with the power supply device 10 and the magnetic power generator 12 and switches to determine whether the magnetic power generator 12 receives the power-generation energy from the power supply device 10. While the switching element 14 switches to enable the magnetic power generator 12 to receive the power-generation energy from the power supply device 10, the magnetic power generator 12 is driven by the power-generation energy to generate a first alternating electromotive force to a first rectifier 16. The first rectifier 16 is electrically connected with the magnetic power generator 12 and at least one electric storage unit 18. The first rectifier 16 receives the first alternating electromotive force, converts the first alternating electromotive force into a DC (Direct Current) electric energy, and outputs the DC electric energy to the electric storage unit 18. Then, the electric storage unit 18 stores the electric energy. The electric storage unit 18 is electrically connected with a switching element 36. The switching element 36 is further electrically connected with at least one power generation module 20, switching the electric connection between the electric storage unit 18 and the power generation module 20.

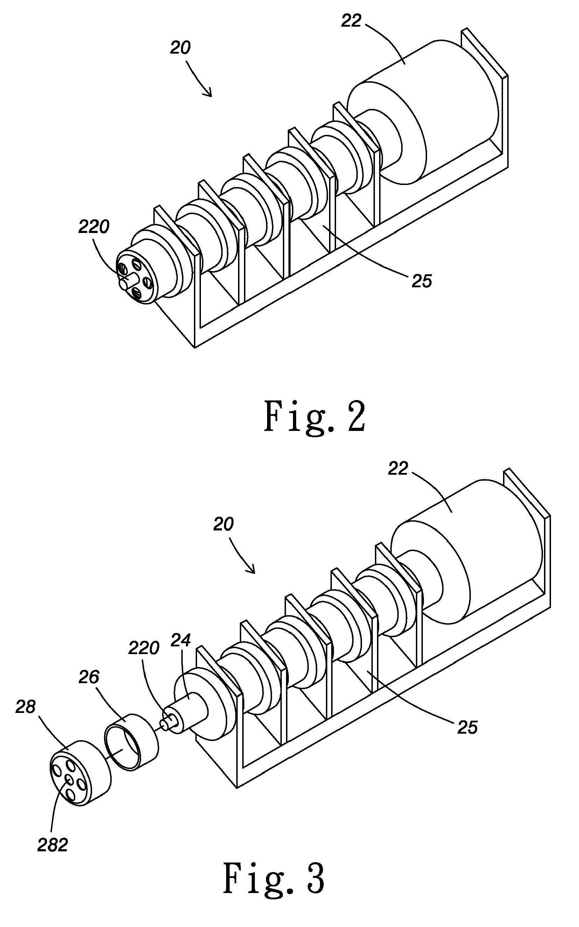

Refer to Figs.2-4. In the second embodiment, the power generator module 20 includes a motor 22, a plurality of three-phase power generation coils 24, and a plurality of magnetic rings 26. The motor 22 is a DC or AC (Alternating Current) motor. In the second embodiment, the motor 22 is an AC motor. Therefore, a first inverter 40 is electrically connected with the switching element 36 and the motor 22, receiving the DC electric energy from the electric storage unit 18, converting the DC electric energy into an AC electric energy and outputting the AC electric energy to the motor 22. The motor 22 has a shaft 220. The motor 22 is powered by the electric energy of the energy storage unit 18, driving the shaft 220 to rotate. The three-phase power generation coils 24 are penetrated by the shaft 220. Each three-phase power generation coil 24 is fixed onto a coil fixing element 25, which is in form of a disc. The shaft 220 penetrates the disc of the coil fixing element 25. Thus, the three-phase power generation coils 24 are attached to the coil fixing elements 25 fixedly and would not rotate together with the shaft 220. In the second embodiment, there are three pieces of three-phase power generation coils 24, and three pieces of coil fixing elements 25 are respectively used to fix the three pieces of three-phase power generation coils 24. The magnetic rings 26 are attached to the shaft 220 fixedly via a plurality of magnetic ring fixing elements 28. Each magnetic ring fixing element 28 surrounds one magnetic ring 26 and fixes the magnetic ring 26 to the shaft 220. Each magnetic ring fixing element 28 has a fixing through-hole 282 fixed to the shaft 220, whereby the magnetic rings 26 and the magnetic ring fixing elements 28 are installed in the shaft 220 fixedly. Each magnetic ring 26 surrounds the corresponding three-phase power generation coil 24. While the shaft 220 rotates, it drives the magnetic rings 26, which are attached to the shaft 220 fixedly, to rotate also. Thus, the magnetic field of the magnetic ring 26 induces a second alternating electromotive force in the corresponding three-phase power generation coil 24. A second rectifier 38 is electrically connected with the three-phase power generation coil 24 of the power generator module 20, receiving the second alternating electromotive force and outputting a DC electric energy to a DC electric energy switching element 36.

In the second embodiment, the switching element 36 is electrically connected with the three-phase power generation coils 24, the motor 22, the magnetic power generator 12 and the electric storage unit 18, switching the electric connection of the three-phase power generation coils 24 and the motor 22. The second rectifier 38 converts the second alternating electromotive force, which is generated by three-phase power generation coils 24, into DC electric energy. The switching element 36 switches to enable the motor 22 to be powered by the DC electric energy. The switching element 36 may alternatively switch to electrically connect the magnetic power generator 12 with the three-phase power generation coils 24. Thus, the magnetic power generator 12 is powered by the electric energy of the power generator module 20. At this time, the switching element 14 switches to cut off the power-generation energy sent to the magnetic power generator 12, and the magnetic power generator 12 is merely driven by the electric energy of the three-phase power generation coils 24. Alternatively, the switching element 36 switches to electrically connect the electric storage unit 18 and the power generator module 20. Then, the electric energy of the electric storage unit 18 is sent to the motor 22, driving the motor 22 to operate.

In the second embodiment, the switching element 36 is also electrically connected with an electric device 34 to switch the electric connection of the electric device 34 and the three-phase power generation coils 24, whereby the electric device 34 can be powered to operate by the electric energy generated by the power generator module 20. Suppose that the electric device 34 is an AC electric device. Then, a second inverter 42 is electrically connected with the electric device 34 and the switching element 36, receiving the DC electric energy, converting the DC electric energy into AC electric energy and outputting the AC electric energy to the electric device 34. In the second embodiment, the switching element 36 is also electrically connected with a power feedback device 30. The power feedback device 30 is further electrically connected with the power supply device 10. Thereby, the switching element 36 can switch to electrically connect the power feedback device 30 with the three-phase power generation coils 24 and make the power feedback device 30 feed back the second alternating electromotive force to the power supply device 10. Then, the power supply device 10 can once more make use of the second alternating electromotive force to generate the power-generation energy. In the second embodiment, a power meter 32 is electrically connected with the power feedback device 30 and the power supply device 10 to measure the quantity of the energy of the second alternating electromotive force fed back to the power supply device 10, whereby the cost of the fed back energy can be deducted from the electricity bill.

In conclusion, the present invention can cyclically utilize the electric energy generated by the power generation module to the decrease the consumption of commercial power and reduce the household expenditure on commercial power. In the regions where no commercial power is available, the present invention can also use solar energy or wind power to generate electric energy and provide the electric energy for power generation.

The embodiments described above are only to exemplify the present invention but not to limit the scope of the present invention. Any equivalent modification or variation according to the characteristic or spirit of the present invention is to be also included within the scope of the present invention.

## Claims

1. A cyclic power supply system, electrically connected with a power supply device to receive power-generation energy, and comprising
at least one magnetic power generator receiving said power-generation energy from said power supply device and driven by said power-generation energy to generate a first alternating electromotive force;
at least one electric storage unit electrically connected with said magnetic power generator, receiving said first alternating electromotive force, and storing said first alternating electromotive force as electric energy;
at least one power generation module electrically connected with said electric storage unit, driven to operate by said electric energy of said electric storage unit, and including
a motor having a shaft driven to rotate by said electric energy of said electric storage unit;
a plurality of magnetic rings connected with said shaft; and
a plurality of three-phase power generation coils penetrated by said shaft and each surrounded by one said magnetic ring, wherein while said magnetic ring rotates together with said shaft, a magnetic field of said magnetic ring induces a second alternating electromotive force in said three-phase power generation coil; and
a power feedback device electrically connected with said power generation module and said power supply device, transmitting said second alternating electromotive force to said power supply device to enable said power supply device to utilize said second alternating electromotive force to generate said power-generation energy.

2. The cyclic power supply system according to claim 1 further comprising a first rectifier electrically connected with said magnetic power generator and said electric storage unit, receiving said first alternating electromotive, converting said first alternating electromotive force into direct current electric energy, and outputting said direct current electric energy to said electric storage unit.

3. The cyclic power supply system according to claim 1, wherein said power supply device is a commercial power supply device or a renewable energy supply device.

4. The cyclic power supply system according to claim 3, wherein renewable energy supply device is a solar power generation device or a wind power generation device.

5. The cyclic power supply system according to claim 1 further comprising at least one electric device electrically connected with said power generation module, receiving said second alternating electromotive force, and driven to operate by said second alternating electromotive force.

6. The cyclic power supply system according to claim 1, wherein said motor is a direct current motor or an alternating current motor.

7. The cyclic power supply system according to claim 6 further comprising an inverter electrically connected with said electric storage unit and said alternating current motor, receiving said electric energy, converting said electric energy into alternating electric energy, and outputting said alternating electric energy to said alternating current motor.

8. The cyclic power supply system according to claim 5 further comprising a switching element electrically connected with said three-phase power generation coils, said motor, said electric device, said power feedback device, said magnetic power generator and said electric storage unit, and switching to enable an electric connection of said three-phase power generation coils and said motor, or an electric connection of said three-phase power generation coils and said electric device, or an electric connection of said three-phase power generation coils and said power feedback device, or an electric connection of said three-phase power generation coils and said magnetic power generator, or an electric connection of said electric storage unit and said motor.

9. The cyclic power supply system according to claim 8 further comprising a second rectifier electrically connected with said power generation module and said switching element, receiving said second alternating electromotive force, converting said second alternating electromotive into a direct current electric energy, and outputting said direct current electric energy.

10. The cyclic power supply system according to claim 1 further comprising a switching element electrically connected with said power supply device and said magnetic power generator, and switching on/off an electric connection of said power supply device and said magnetic power generator.

11. The cyclic power supply system according to claim 1 further comprising a power meter electrically connected with said power feedback device and said power supply device, and measuring a quantity of energy of said second alternating electromotive force output by said power generation module.

12. The cyclic power supply system according to claim 8 further comprising a second inverter electrically connected with said switching element and said electric device, receiving said electric energy, converting said electric energy into an alternating current electric energy, and outputting said alternating electric energy to said electric device.

13. The cyclic power supply system according to claim 1 further comprising a plurality of magnetic ring fixing elements respectively arranged in said magnetic rings to attach said magnetic rings to said shaft fixedly.

14. The cyclic power supply system according to claim 1 further comprising a plurality of coil fixing elements respectively arranged in said three-phase power generation coils, fixing said three-phase power generation coils, and preventing said three-phase power generation coils from rotating together with said shaft.
